# EUROPEAN PATENT APPLICATION

(11) **EP 0 604 984 A1**
(43) Date of publication of application: **06.07.1994**
(21) Application number: 93121023.1
(22) Date of filing: 28.12.1993
(51) Int. Cl.: B29D 30/00

(54) **Vulcanizing method and precuring device for a pneumatic tire**

(30) Priority: 28.12.1992 JP 349415/92
(71) Applicant: BRIDGESTONE CORPORATION, Tokyo 104 (JP)
(72) Inventor: Sorioka, Michtoshi, Hidaka-shi, Saitama-ken (JP); Yahagi, Masashi, Katsushika-ku, Tokyo (JP)
(74) Representative: Görg, Klaus, Dipl.-Ing.

(57) **Abstract**

A method of vulcanizing a pneumatic tire, which involves vulcanizing a green tire (12) for production of the pneumatic tire, the method characterized in that:
only a bead region (18) of the green tire (12) is precured in a precuring process; and,
the green tire (12) is cured in a curing process after the precuring is completed.

## Description

### BACKGROUND OF THE INVENTION

### Field of the Invention

The present invention relates to a vulcanizing method and a precuring device for a pneumatic tire which is used on vehicles and the like.

### Description of the Related Art

Green tires are vulcanized and molded into finished tire products by means of a curing mold.

In this curing-and-molding process, the green tire is held between an upper mold and a lower mold, both of which form the curing mold. The tire is then pressed against tire-forming surfaces of the upper and lower molds by a bladder which is expanded within the curing mold. The pressed tire is simultaneously heated through the supply of high-temperature, high-pressure steam into the bladder. As a result, the rubber of the entire green tire is vulcanized, and a tire shape is formed.

In the above process of curing and molding the green tire, when the bladder expands, tension is applied to ply cords. This causes the ply cords to be pulled out at locations about the periphery of bead portions of the tire. Further, an amount of the ply cords to be pulled as a result of the above pulling action varies along a circumferential direction of the tire. As a result, equality in a ply cord length with respect to the circumferential direction of the tire is aggravated after vulcanisation, compared to the green tire.

This drawback detracts from the uniformity of the tire. Consequently, the use of such a tire on a vehicle or the like produces a feeling of uncomfortableness, and results in vibrations and the like.

In view of the above, an object of the present invention is to provide a vulcanizing method and a precuring device for a pneumatic tire, in which the uniformity of the tire is maintained without being deteriorated in the curing-and-molding process.

### SUMMARY OF THE INVENTION

An aspect of the present invention provides a method for vulcanizing a pneumatic tire, comprising the steps of: precuring a bead region only of a green tire in a precuring process; and, curing the green tire in a curing process after the precuring is completed.

By way of illustrative example of the present invention, the precuring preferably comprises the steps of: holding the vicinity of the bead region between a pair of molds each of which includes inner molds and outer molds; and, heating the inner molds while cooling the outer molds, thereby vulcanizing the bead region only within the inner and outer molds. This method of the present invention provides the precured bead regions, ensures a desired shape in the vicinity of tire beads, and provides vulcanized rubber at the bead regions. This feature restrains movement of ply cords at the bead regions when tension is applied to the ply cords in the curing process. As a result, uniformity of the tire is maintained without being deteriorated.

In accordance with another aspect of the present invention, there is provided a device for precuring a pneumatic tire, which comprises: a mold positioned adjacent to a bead region of a green tire in such a manner as to oppose the bead region in order to heat the bead region; a pressing means positioned so as to oppose the mold with respect to the bead region of the green tire in order to hold the bead region between the mold and the pressing means, thereby vulcanizing the bead region of the green tire; and, a driving means for moving the pressing means toward the bead region so as to hold the bead region between the mold and the pressing means.

By way of illustrative example of the present invention, it is preferred that the mold includes an inner mold housing a heating member, an outer mold housing a cooling member, and, a heat-insulating material disposed between the inner and outer molds, in order to permit the inner mold to vulcanize the bead region without curing any portion of the green tire which opposes the outer mold. The device according to the present invention ensures a desired shape in the exclusive vicinity of tire beads and vulcanizes only rubber located at the bead regions. As a result, the vulcanized rubber allows ply cords at the bead regions to be fixed about bead cores.

### BRIEF DESCRIPTION OF THE DRAWINGS

FIG. 1 is a cross-sectional view, showing a precuring device according to a first embodiment;
FIG. 2 is a cross-sectional view of a green tire;
FIG. 3 is a graph, illustrating a relationship between circumferential position and displacement amount at each ply end;
FIG. 4 is a cross-sectional view, depicting an essential part of a precuring device according to a second embodiment;
FIG. 5 is a cross-sectional view, illustrating an essential part of a precuring device according to a third embodiment,
FIG. 6 is a cross-sectional view, illustrating an essential part of a precuring device according to a fourth embodiment; and,
FIG. 7 is a cross-sectional view, illustrating an essential part of a precuring device according to a fifth embodiment.

### DETAILED DESCRIPTION OF THE PREFERRED EMBODIMENTS

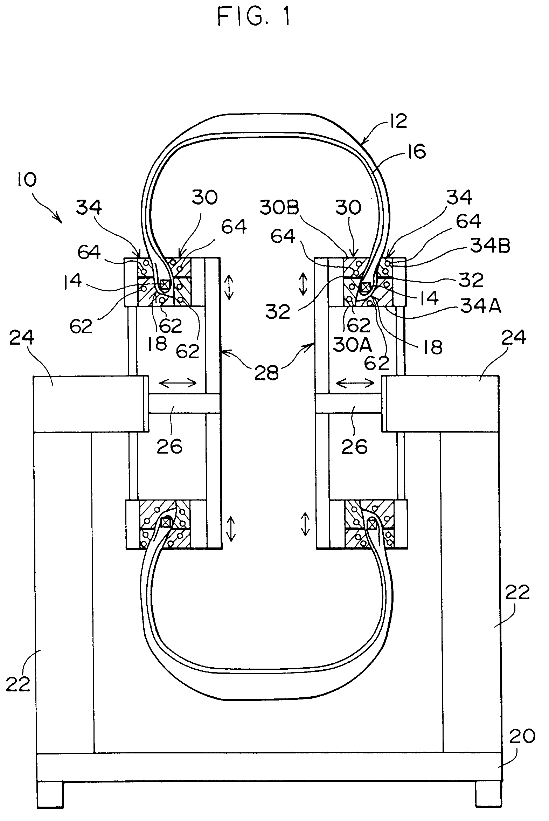

A first embodiment of the present invention will now be described with reference to FIG. 1 through FIG. 3.

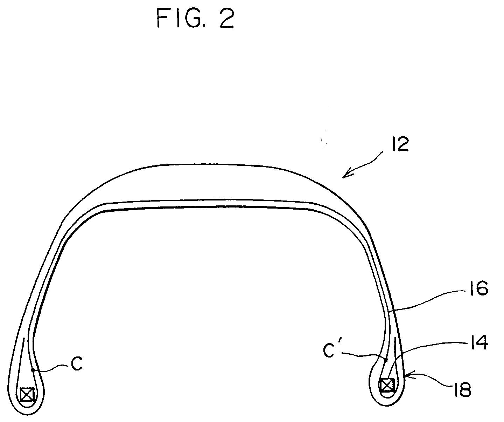

FIG. 2 is a cross-sectional view, illustrating an example of a green tire 12. The green tire 12 is a green pneumatic tire having a cylindrical shape. The green tire 12 includes a pair of bead cores 14 and a carcass ply 16. The bead cores 14 are each located at bead portions 18 which correspond to bead regions. Opposite end portions of the carcass ply 16 is folded back about the bead cores 14. Note that descriptions related to any other components of the green tire 12 will herein be omitted because the internal structure of the tire 12 is commonplace.

FIG. 1 shows a precuring device 10 for vulcanizing a bead portion 18 on each side of the green tire 12.

The precuring device 10 is provided with a pair of posts 22 located on a base 20. A pair of cylinders 24 is mounted on top of each post 22 in alignment with each other. Since the cylinders 24 include a pair of cylinder rods 26, the cylinder rods 26 are thereby opposed to each other. The cylinder rods 26 have a pair of disk-shaped, bead-supporting devices 28 mounted on respective distal ends thereof in order to support the green tire 12.

The bead-supporting devices 28 are provided with annular inner surface-forming molds 30 for forming inner tire surfaces at the bead portions 18. Although unillustrated, the inner surface-forming mold 30 is circumferentially divided into a plurality of pieces. The pieces are supported on the distal end of the cylinder rod 26 via an extending and retracting means (not shown) which is provided on each of the bead-supporting devices 28. Accordingly, the inner surface-forming molds 30 are adapted to be radially retracted from their positions shown in FIG. 1. An extending and retracting mechanism for a molding drum, which is used to form a drum-shaped green tire, may be employed as the above-noted extending and retracting means.

Each of the inner surface-forming molds 30 includes an inner mold 30A and an outer mold 30B. The inner mold 30A lies in a radial inward direction of the tire 12, while the outer mold 30B is positioned in a radial outward direction of the tire 12. The inner mold 30A houses a heat pipe 62 which is a kind of heating means. The heat pipe 62 is capable of heating the inner mold 30A to a temperature required for rubber vulcanization. The heat pipe 62 may be heated by either hot steam being fed through the heat pipe 62 or by an electric heater provided within the heat pipe 62.

A heat-insulating material 32 is sandwiched between the outer mold 30B and the inner mold 30A. The outer mold 30B houses a cooling pipe 64 which is a kind of cooling means. The cooling pipe 64 is designed to allow a flow of cooling water or cooling air and the like therein.

Meanwhile, outer surface-forming molds 34 are mounted to main body portions of the cylinders 24. The outer surface-forming molds 34, which are mated with the inner surface-forming molds 30, form outer tire surfaces at the bead portions 18 of the green tire 12 in an axial direction of the tire 12.

Each of the outer surface-forming molds 34 includes an inner mold 34A and an outer mold 34B. The inner mold 34A has a forming surface for forming an outer tire surface shape. The shape extends between a bead base portion at the bead portion 18 and the vicinity of the bead core 14. Similar to the inner mold 30A, the inner mold 34A houses a heat pipe 62.

Further, a heat-insulating material 32 is interposed between the outer mold 34B and the inner mold 34A. Similar to the outer mold 30B, the outer mold 34B has a cooling pipe 64 built therein.

Next, a description will be given of the vulcanization process of a green tire 12.

First, the cylinder rods 26 of the precuring device 10 are extended so as to inwardly move the bead-supporting devices 28 closer together. Then, extending and retracting means is operated to retract the inner surface-forming molds 30 until the outer diameters of the inner surface-forming molds 30 are smaller than the inner diameters of outer surface-forming molds 34. Thereafter, the cylinder rods 26 are retracted toward the cylinders 24 in order to move the bead-supporting devices 28 outwardly. As a result, a space for the green tire 12 to be placed therein is defined between the bead-supporting devices 28.

Next, the green tire 12 is inserted between the bead-supporting devices 28 in such a manner as to align the axis of the green tire 12 with the axis of the cylinder rods 26.

In this state, the cylinder rods 26 are extended to inwardly move the bead-supporting devices 28. Next, the inner surface-forming molds 30 are radially extended by means of the extending and retracting means. Subsequently, the cylinder rods 26 are retracted to move the bead-supporting devices 28 in the outward direction. Bead portions 18 on both sides of the green tire 12 are thereby rigidly held between the inner and outer surface-forming molds 30 and 34 (in a state shown in FIG. 1).

Next, heat from respective heat pipes 62 is applied to the inner molds 30A and 34A in order to vulcanize rubber around bead cores 14. At the same time, the outer molds 30B and 34B are cooled to avoid curing any rubber other than in the vicinity of the bead cores 14.

The green tire 12 is removed from the precuring device 10 after a predetermined time elapses and the prevulcanisation of the rubber around the bead cores 14 is completed. This is the end of the precuring process. Although the present invention follows the step of holding the green tire 12 before heating the inner molds 30A and 34A, the bead portions 18 of the green tire 12 may be rigidly held in the preceding manner after the inner molds 30A and 34A are heated.

Following the end of the precuring process, a curing process is carried out using any known cure-molding machine, in order to vulcanize the entire green tire 12. However, it is to be noted that the previously vulcanized vicinity of the bead cores 14 is not actually vulcanized again. Therefore, the rest of the green tire 12 is to be cured.

In the curing process, the expansion of an unillustrated bladder applies tension to a carcass ply 16. However, since the rubber around the bead cores 14 at the bead portions 18 has been previously vulcanized, the vulcanized rubber causes the carcass ply 16 to be fixed to the bead cores 14. The carcass ply 16 is thereby prevented from being pulled out, and tire uniformity is prevented from being deteriorated at the time of cure-molding.

Improvements in an tire prepared in accordance with the present embodiment will now be described with reference to data showing the amount of cord slip of a tire which was vulcanized by a previous technique.

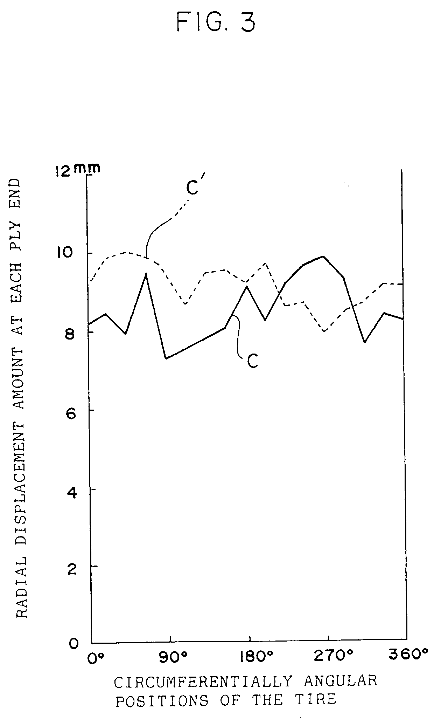

FIG 3 shows a graph, illustrating a cord slip amount of a tire (size: 165SR13) which was cured by the previous technique. (The term "cord slip amount" as used herein means one which represents an amount of ply cords to be pulled out. To be specific, using circumferentially extending lines, marking is made at two positions which are designated by points C and C' on a carcass ply 16 in FIG. 2. The carcass ply 16 is incorporated in the tire in advance. This marking determines how much each of the lines is displaced in a radial direction of the tire before and after cure molding. Thus, the cord slip amount refers to the determined displacement amount (unit: mm).) In the graph, a vertical axis represents a displacement amount of each of the marking lines, while a horizontal axis indicates a circumferential angle of the tire.

As can be seen from FIG. 3, for the tire which was vulcanized according to the previous technique, the cord slip amount was 8.5 mm on average at the point C. A peak-to-peak variation in the cord slip amount was 2.7 mm. At the point C', an average of the cord slip amount was 9.1 mm, and the peak-to-peak variation in the cord slip amount was 2.4 mm.

In relation to this, the tire according to the present embodiment exhibited substantially no displacement amount before and after cure molding because the rubber about the periphery of bead cores 14 was vulcanized in the precuring process.

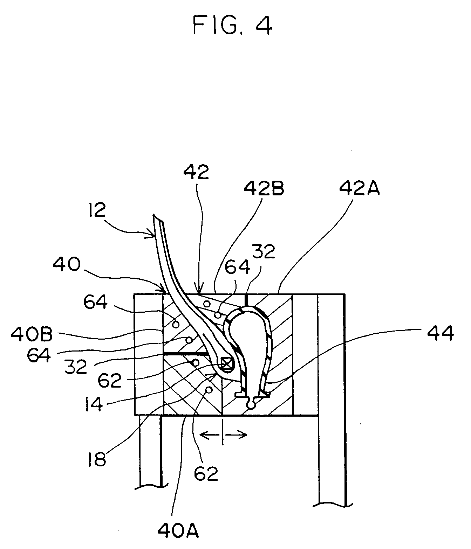

A second embodiment of the present invention will now be described with reference to FIG. 4. Note that the same references are hereinafter given for members common to those described in the first embodiment; therefore, descriptions related thereto will be omitted.

In a precuring device 10 according to the present embodiment, each outer surface-forming mold 40 includes an inner mold 40A and an outer mold 40B. The inner mold 40A has a forming surface for forming an outer tire surface shape. The shape extends from a bead heel portion at each bead portion 18 to an axially outward extending surface portion around each bead core 14. In addition, the inner mold 40A houses a heat pipe 62. The outer mold 40B has a cooling pipe 64 provided therein.

Each inner surface-forming mold 42 includes an inner mold 42A and an outer mold 42B. The inner mold 42A has a forming surface for forming an outer shape of each bead base portion. The inner mold 42A further has a bead bladder 44 which abuts between a bead toe portion and the vicinity of the bead core 14 at the bead portion 18.

A heat-insulating material 32 is sandwiched between the outer mold 42B and the inner mold 42A. The outer mold 42B houses a cooling pipe 64. In addition, the outer mold 42B has a forming surface that abuts from an abutting edge portion of the bead portion 18, which contacts the bead bladder 44, within a predetermined range in a radially outward direction of the tire.

The bead bladder 44 is expandable and collapsible. Accordingly, the bead bladder 44 is adapted to be expanded so as to heat and press the bead portion 18 toward the outer surface-forming mold 40 when the bead bladder 44 is filled with high-temperature, high-pressure steam.

In the present embodiment, the bead portion 18 on each side of a green tire 12 is fixedly held between the inner and outer surface-forming mold 42 and 40. Thereafter, heat from the heat pipe 62 is applied to the inner mold 40A, while the bead bladder 44 is filled with high-temperature, high-pressure steam, thereby vulcanizing the rubber around the bead core 14. At the same time, the outer molds 40B and 42B are cooled to avoid curing any rubber other than at the bead portion 18.

Similarly to the first embodiment, the entire green tire 12 is cured after prevulcanization of the rubber around the bead cores 14 is completed. As a result, the present embodiment provides operation and benefits similar to the first embodiment.

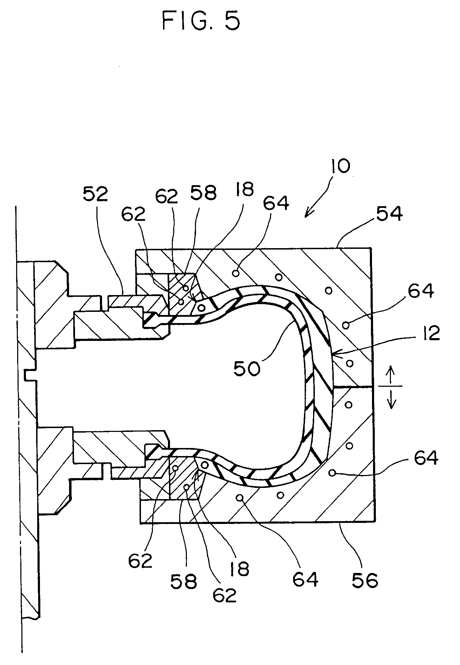

Next, a third embodiment of the present invention will be described with reference to FIG. 5.

FIG. 5 illustrates a precuring device 10 according to the present embodiment. The precuring device 10 is constructed in a manner substantially similar to conventional cure-molding machines. The precuring device 10 includes loaders 52, an upper mold 54, and a lower mold 56. The loaders 52 serve to anchor a bladder 50 thereto. The upper mold 54 supports a half of an axially extending tire portion relative to an equatorial plane of a green tire 12. The lower mold 56 supports the other half of the above tire portion.

Meanwhile, the precuring device 10 differs from the conventional machines in the following: tire-abutting surfaces of the upper and lower molds 54 and 56 form a smooth pattern (without irregularities which form grooves and the like); and, respective cooling pipes 64 are housed in the upper and lower molds 54 and 56 in order to cool the molds 54 and 56. Except for bead portions 18, a space defined by the upper and lower molds 54 and 56 has a configuration identical or close to a green tire shape. Accordingly, the space can prevent deformation of the green tire 12, which would otherwise occur when the tire 12 is filled with air.

The upper and lower molds 54 and 56 are each integrally provided with heating rings 58 in order to heat the vicinity of bead cores 14 at the bead portions 18.

Further, each of the heating rings 58 houses a heat pipe 62. Moreover, according to the present embodiment, the bladder 50 of the precuring device 10 is filled with air having an ordinary temperature. This arrangement permits only rubber in the vicinity of the bead portions 18 to be vulcanized. As a result, the present embodiment provides operation and benefits similar to the first embodiment.

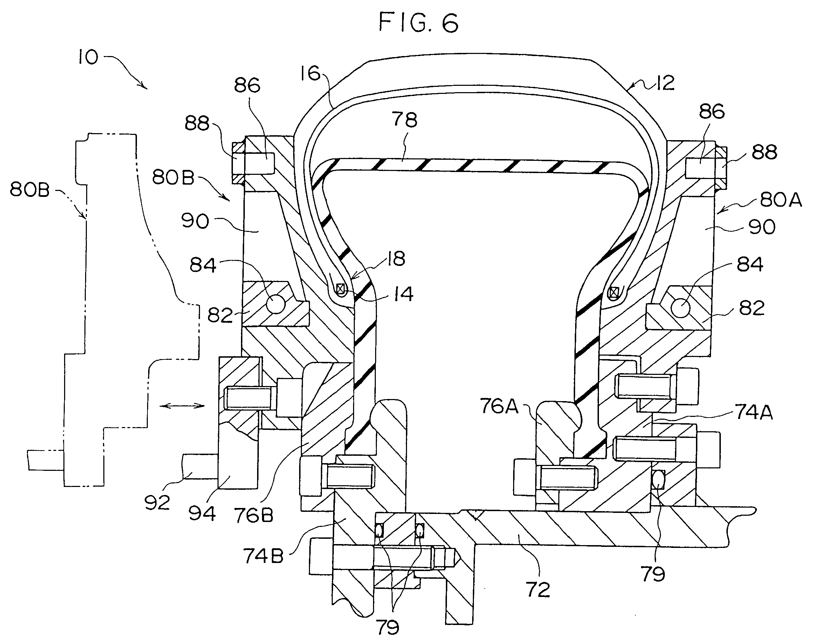

A fourth embodiment of the present invention will now be described with reference to FIG. 6.

As shown in FIG. 6, a precuring device 10 according to the present embodiment includes a pair of brackets 74A and 74B. The brackets 74A and 74B are each fixed to a bead-supporting device 72 having a cylindrical shape (which is only partially shown in the figure). The bead-supporting device 72 supports a green tire 12. The precuring device 10 further includes fastening rings 76A and 76B which are correspondingly screwed to the bracket 74A and 74B respectively. Further, respective root end portions of a ring-shaped bladder 78 are fastened between the bracket 74A and the fastening ring 76A and between the bracket 74B and the fastening ring 76B. The bladder 78 forms a U-shaped cross-section.

An outer peripheral surface of the bladder 78 includes forming surface portions which abut inner surface sides of the green tire 12. The inner surface sides extend from bead toe portions of the green tire 12 onto upper sides of bead portions 18.

The bead-supporting device 72 is formed with unillustrated through-holes, through which air is filled into the bladder 78. The bladder 78 is thereby expanded. In order to prevent air leakage, O-rings 79 are provided at joint portions of the device 72.

An outer surface-forming mold 80A is screwed to the bracket 74A that is shown at the right of the figure. The outer surface-forming mold 80A has a ring shape (although only partially shown in FIG. 6). The outer surface-forming mold 80A has a forming surface which abuts an outer surface portion of the green tire 12. The outer surface portion extends from the bead toe portion of the bead portion 18 to a lower tire portion.

A block 82 is fixed around the inner periphery of the outer surface-forming mold 80A (i.e., the block 82 lies in a downward direction of FIG. 6). The block 82 is formed into a ring shape along the outer surface-forming mold 80A. The block 82 houses an electric heater 84 which acts as a heating means. Further, a cooling water passage 86 is formed around the outer periphery of the outer surface-forming mold 80A. The cooling water passage 86 is a ring-shaped cooling means which has an opening 88 for the pouring in and draining of cooling water.

Moreover, in the outer surface-forming mold 80A, a plurality of cooling fins 90 (although the only one cooling fin 90 is shown in the figure) are formed between the electric heater 84 and the cooling water passage 86 so as to extend radially about the center of the ring-shaped outer surface mold 80A.

A distal end portion of a cylinder rod 92 is located on the left side of the bladder 78 in FIG. 6. The cylinder rod 92 extends from a driving means, i.e., a cylinder (now shown). A connector 94 is fixed to the distal end portion of the cylinder rod 92. In addition, an outer surface-forming mold 80B is screwed to the connector 94 so as to oppose the outer surface-forming mold 80A. The outer surface-forming molds 80A and 80B are identical in shape. Similar to the outer surface-forming mold 80A, the outer surface-forming mold 80B includes an electric heater 84, a cooling water passage 86, and a plurality of fins 90 as well.

Accordingly, when the cylinder is actuated, the outer surface-forming mold 80B is reciprocated between two positions: one position shown by a solid line in FIG. 6, at which the green tire 12 is vulcanized; and, the other position shown by a two-dot chain line in FIG. 6, at which the green tire 12 is inserted and withdrawn from the precuring device 10.

Next, a description will be given of a vulcanizing process of the green tire 12 in accordance with the present embodiment.

The cylinder rod 92 of the precuring device 10 is initially retracted toward the cylinder so as to separate the outer surface-forming mold 80B from the bead-supporting device 72. The outer surface-forming mold 80B is thereby moved to the position shown by the two-dot chain line. As a result, a space for the green tire 12 to be inserted therein is defined between the outer surface-forming mold 80A of the bead-supporting device 72 and the outer surface-forming mold 80B on the side of the cylinder rod 92.

Then, the green tire 12 is inserted between the outer surface-forming molds 80A and 80B. At this stage, the bladder 78 is deflated, and the green tire 12 can be inserted between the molds 80A and 80B without difficulties.

In the above state, the cylinder rod 92 is extended to move the outer surface-forming mold 80B toward the bead-supporting device 72 until the mold 80B is brought into contact with the fastening ring 76B. The cylinder rod 92 and the mold 80B are then stopped. Next, the bladder 78 is inflated. The bead portions 18 of the green tire 12 are thereby held between a pair of side surface portions of the bladder 78 and the molds 80A and 80B (in a state shown by the solid line in FIG. 6).

Thereafter, heat from the electric heaters 84 is applied to the molds 80A and 80B so as to vulcanize the rubber around bead cores 14. At the same time, cooling water is flows through the cooling water passages 86 on the outer peripheries of the outer surface-forming molds 80A and 80B. The outer peripheries of the molds 80A and 80B are thereby cooled. Further, heat to be conducted from the inner peripheries of the outer surface-forming molds 80A and 80B is released to the outside by the fins 90 which are positioned between the inner and outer peripheries of the molds 80A and 80B. Heat insulation is thereby achieved.

That is, the cooling water within the cooling water passages 86 and the fins 90 cool the peripheries of the molds 80A and 80B without vulcanizing any portions other than the vicinities of the bead cores 14.

After a predetermined period of time elapses and the precuring around the bead cores 14 is completed, the following happens:
the bladder 78 is collapsed by the evacuation of, and the bead portions 18 of the green tire 12 are released from the state of being held between the side surface portions of the bladder 78 and the outer surface-forming molds 80A and 80B; the cylinder rod 92 is thereafter retracted to move the outer surface-forming mold 80B from the solid line-designated position to the position shown by the two-dot chain line; and, in this state, the green tire 12 is removed from the precuring device 10. This is the end of the precuring process.

Similar to the first embodiment, the entire green tire 12 is vulcanized using any known cure-molding machine after the end of the precuring process. Accordingly, the rubber about the peripheries of the bead cores 14 has already been cured when the above vulcanization is practiced. As a result, the present embodiment provides benefits similar to the first embodiment.

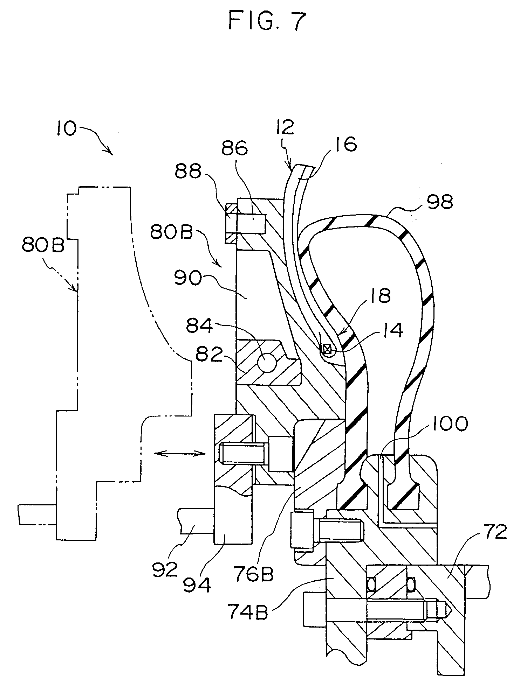

A fifth embodiment according to the present invention will be described with reference to the FIG. 7. Note that the same references are hereinafter given for members identical to those described in the fourth embodiment; therefore, descriptions related thereto will be omitted.

As illustrated in FIG. 7, a precuring device 10 according to the present embodiment is substantially similar in construction to that of the fourth embodiment. However, the above device 10 is provided with respective bladders 98 which accommodate a pair of bead portions 18 of a green tire 12, as opposed to the fourth embodiment which employs a single bladder 78. (Note that, however, one of the bladders 98, which is located on the side of an outer surface-forming mold 80A, is omitted in FIG. 7.) Further, the precuring device 10 is formed with through-holes 100 for filling the bladders 98 with air.

As a result, the present embodiment provides actions similar to the fourth embodiment during prevulcanization of the green tire 12. However, according to the present embodiment, the pair of bladders 98 presses the pair of bead portions 18 against the outer surface-forming molds 80A and 80B. This feature differs from the fourth embodiment, and eliminates the need for expanding such a large bladder 78 as used for the fourth embodiment. Consequently, more efficient prevulcanization is achievable.

Similar to the first embodiment, the entire green tire 12 is vulcanized using any known cure-molding machine after the above precuring process is completed. Accordingly, rubber about the peripheries of bead cores 14 has already been cured when the above vulcanization is carried out. As a result, the present embodiment provides benefits similar to the first embodiment.

It is only necessary for the method for vulcanizing a pneumatic tire in accordance with the present invention to include: a precuring process in which only bead regions of a green tire are precured; and, a curing process in which the green tire is cured after the precuring process. In addition, since the precuring device 10 is not limited in construction to the foregoing embodiments, various changes and modifications in the device 10 may be made.

In conclusion, pursuant to the aforesaid method of the present invention, only bead regions of the green tire are prevulcanized in the precuring process, followed by vulcanization of the entire green tire in the curing process. The prevulcanization of the bead regions in the precuring process both ensure a desired shape in the vicinity of tire beads and provide cured rubber at the bead regions. Accordingly, the cured rubber causes ply cords at the bead regions to be fixed around bead cores.

As a result, the present invention provides a great benefit in which uniformity of the tire is sustained without being deteriorated because the ply cords at the bead regions are restrained from being moved when experiencing tension in the curing process.

## Claims

1. A method for vulcanizing a pneumatic tire, which involves vulcanizing a green tire (12) for production of said pneumatic tire, said method characterized in that:
a bead region (18) only of said green tire (12) is precured in a precuring process; and,
said green tire (12) is cured in a curing process after said precuring is completed.

2. A method for vulcanizing a pneumatic tire according to claim 1, wherein said precuring comprises the steps of: holding only a vicinity of said bead region (18) between molds (30, 34); and, vulcanizing said bead region (18) only within said molds (30, 34).

3. A method for vulcanizing a pneumatic tire according to claim 1, wherein said precuring comprises the steps of: holding the vicinity of said bead region (18) between a pair of molds (30, 34), each of which includes inner molds (30A, 34A) and outer molds (30B, 34B) respectively; holding said bead region (18) between said inner molds (30A, 34A) and outer molds (30B, 34B) and, heating only said inner molds (30A, 34A) with heating means (62), whereby said bead region (18) is vulcanized.

4. A method for vulcanizing a pneumatic tire according to claim 1, wherein said precuring comprises the steps of: holding the vicinity of said bead region (18) between a pair of molds (30, 34), each of which includes inner molds (30A, 34A) and outer molds (30B, 34B) respectively; and, heating said inner molds (30A, 34A) by the use of heating means (62) which are provided in said inner molds (30A, 34A), while cooling said outer molds (30B, 34B) by means of cooling means (64) which are provided in said outer molds (30B, 34B), whereby only said bead region (18) is vulcanized.

5. A method for vulcanizing a pneumatic tire according to claim 1, wherein said precuring comprises the steps of: holding the vicinity of said bead region (18) between a pair of molds (40, 42), one of said pair of molds (40, 42) being provided with a bead bladder (44); and, causing said bead bladder (44) to press said bead region (18) against a heated, inner wall surface of the other of said pair of molds (40, 42), thereby vulcanizing said bead region (18) within said pair of molds (40, 42).

6. A method for vulcanizing a pneumatic tire according to claim 1, wherein said precuring comprises the steps of: causing a bladder (50) to press said green tire (12) against inner wall surfaces of molds (54, 56); and, causing said bladder (50) to press bead regions (18) of said green tire (12) against heating rings (58) so as to heat said bead regions (18), said heating rings (58) being disposed within said molds (54, 56), thereby vulcanizing said bead regions (18) within said molds (54, 56).

7. A method for vulcanizing a pneumatic tire according to claim 6, wherein each of said heating rings (58) houses a heat pipe (62) for heating said heating ring (58), thereby vulcanizing said bead regions (18).

8. A method for vulcanizing a pneumatic tire, which involves vulcanizing a green tire (12) for production of said pneumatic tire, said method characterized in that:
only bead regions (18) of said green tire (12) are precured by causing a bladder (78) to press said bead regions (18) against heated, inner wall surfaces of molds (80A, 80B) in a precuring process; and,
said green tire (12) is vulcanized in a curing process after the end of said precuring.

9. A method for vulcanizing a pneumatic tire according to claim 8, wherein said molds (80A, 80B) are formed by a pair of outer surface-forming molds (80A, 80B), one of which is connected to a driving means (92), whereby when said precuring is to be carried out, said green tire (12) is received between said pair of outer surface-forming molds (80A, 80B) in a state of said pair of outer surface-forming molds (80A, 80B) being spaced apart from each other.

10. A method for vulcanizing a pneumatic tire according to claim 8, wherein said precuring comprises the step of: heating said bead regions (18) by providing said molds (80A, 80B) with heating means (84), whereby said bead regions (18) are vulcanized.

11. A method for vulcanizing a pneumatic tire according to claim 10, wherein said heating means (84) comprise electric heater which are housed in said molds (80A, 80B), so that said bead regions (18) are vulcanized through heating of said molds (80A, 80B) by said electric heaters.

12. A device for precuring a pneumatic tire, which involves vulcanizing a green tire (12) for production of said pneumatic tire, said device characterized by:
a mold (34) positioned adjacent to a bead region (18) of said green tire (12) in such a manner as to oppose said bead region (18) in order to heat said bead region (18);
a pressing means (30) positioned so as to oppose said mold (34) with respect to said bead region (18) of said green tire (12) in order to hold said bead region (18) between said mold (34) and said pressing means (30), thereby vulcanizing said bead region (18) of said green tire (12); and,
a driving means (24) for moving said pressing means (30) toward said bead region (18) so as to hold said bead region (18) between said mold (34) and said pressing means (30).

13. A device for precuring a pneumatic tire according to claim 12, wherein said mold (34) comprises an inner mold (34A) and an outer mold (34B), said inner mold (34A) housing a heating means (62) which heats said bead region (18) only, thereby vulcanizing said bead region (18).

14. A device for precuring a pneumatic tire according to claim 12, wherein said mold (34) comprises an inner mold (34A) housing a heating means (62), an outer mold (34B) housing a cooling means (64), and a heat-insulating material (32) disposed between said inner and outer molds (34A, 34B), thereby permitting said inner mold (34A) to vulcanize said bead region (18) without curing any portion of said green tire (12) which opposes said outer mold (34B).

15. A device for precuring a pneumatic tire according to claim 14, wherein said heating means comprises a heat pipe (62) through which high-temperature steam is fed, and wherein said cooling means comprises a cooling pipe (64).

16. A device for precuring a pneumatic tire according to claim 12, wherein said pressing means comprises an inner surface-forming mold (30) which heats said bead region (18) by holding said bead region (18) between said mold (34) and said inner surface-forming mold (30).

17. A device for precuring a pneumatic tire according to claim 12, wherein said pressing means comprises a bead bladder (44) for pressing said bead region (18) in order to hold said bead region (18) between said bead bladder (44) and said mold (34), thereby vulcanizing said bead region (18).

18. A device for precuring a pneumatic tire according to claim 12, wherein said pressing means comprises a bladder (50) for pressing said green tire (12) against inner surfaces of said molds (34), each of said molds (34) housing a heating ring (58), thereby permitting said bead regions (18) to be held between said bladder (50) and said heating rings (58) so as to vulcanize said bead regions (18).

19. A device for precuring a pneumatic tire according to claim 12, wherein said driving means comprises a cylinder (24) having a cylinder rod (26), said cylinder rod (26) being provided with said pressing means, thereby permitting said cylinder (24) to be operated to hold said bead region (18) between said mold and said pressing means.

20. A device for precuring a pneumatic tire according to claim 19, wherein said pressing means (30) is supported by an extendable and retractable bead-supporting device (28), said bead-supporting device (30) moving said pressing means (30) between two positions, at one of which is positioned to oppose said mold (34), while being positioned to face away from said mold (34) at the other of said two positions so as to allow insertion of a green tire (12), and wherein said pressing means (30) is mounted to said cylinder rod (26) via said bead-supporting device (28) such that said cylinder (24) is operated to permit said bead region (18) to be held between said mold (34) and said pressing means (30) when said pressing means (30) is positioned to oppose said mold (34).

21. A device for precuring a pneumatic tire, which involves vulcanizing a green tire (12) for production of said pneumatic tire, said device characterized by:
a pair of molds (80A, 80B) for heating bead regions (18) of a green tire (12), said pair of molds (80A, 80B) being positioned adjacent to said bead regions (18) so as to oppose said bead regions (18);
a bladder (78) for pressing the vicinities of said bead regions (18) of said green tire (12) against respective inner walls of said pair of molds (80A, 80B); and,
a driving means (92) having one of said pair of molds (80A, 80B) connected thereto, said driving means (92) reciprocating said one of said pair of molds (80A, 80B) so as to allow said green tire (12) to be inserted into and withdrawn from a space between said pair of molds (80A, 80B).

22. A device for precuring a pneumatic tire according to claim 21, wherein said pair of molds (80A, 80B) includes respective heating means (84) for heating said pair of molds (80A, 80B), so that said bead regions (18) are heated through heating of said pair of molds (80A, 80B) by said heating means (84).

23. A device for precuring a pneumatic tire according to claim 21, wherein said pair of molds (80A, 80B) includes respective heating means (84) for heating said pair of molds (80A, 80B), and further includes respective cooling means (86) which are positioned on the peripheries of said pair of molds (80A, 80B) with respect to said heating means (84), so that said bead regions (18) are heated through heating of said pair of molds (80A, 80B) by said heating means (84), while the peripheries of said pair of molds (80A, 80B) are cooled by said cooling means (86), whereby only said bead regions (18) are vulcanized.

24. A device for precuring a pneumatic tire according to claim 23, wherein said pair of molds (80A, 80B) has heat-releasing fins (90) formed between said heating means (84) and said cooling means (86).

25. A device for precuring a pneumatic tire according to claim 21, wherein a pair of said bladders is provided in such a manner that said bladders (98) individually press the vicinities of said bead regions (18) of said green tire (12) against said respective inner walls of said pair of molds (80A, 80B).

26. A device for precuring a pneumatic tire according to claim 21, wherein said driving means comprises a cylinder, whose a cylinder rod (92) is connected to one of said pair of molds (80A, 80B) so as to reciprocate said one of said pair of molds (80A, 80B).
